# EUROPÄISCHE PATENTSCHRIFT

(11) **EP 1 112 807 B1**
(45) Veröffentlichungstag und Bekanntmachung des Hinweises auf die Patenterteilung: **09.03.2005**
(21) Anmeldenummer: 00123629.8
(22) Anmeldetag: 30.10.2000
(51) Int. Cl.: B23Q 3/08

(54) **Palette zum Spannen eines zu bearbeitenden Werkstückes**
Pallet for clamping a processed workpiece
Palette pour serrer une pièce à travailler

(30) Priorität: 29.12.1999 IT MI992732
(43) Veröffentlichungstag der Anmeldung: 04.07.2001
(73) Patentinhaber: FASTER S.p.A., 20066 Melzo (Milano) (IT)
(72) Erfinder: Arosio, Massimo, 26027 Rivolta d'Adda (CR) (IT)
(74) Vertreter: Mayer, Hans Benno, Dipl.-Ing.

(56) Entgegenhaltungen:
- DE-A1- 3 309 555
- DE-A1- 4 222 193

## Beschreibung

Die vorstehende Erfindung betrifft eine Palette mit Aufnahmevorrichtung gemäss dem Oberbegriff des Anspruchs 1, zum Spannen eines Werkstückes, das Bearbeitungsvorgängen zu unterziehen ist, z.B. spanabhebenden Bearbeitungsvorgängen (siehe, z.B., DE-33 09 555 - A).

Es ist allgemein bekannt, dass zur spanabhebenden Bearbeitung in modernen Bearbeitungszentren die Werkstücke auf einer Palette angeordnet und in genauer Lage auf der Palette gespannt werden, wobei für den Spannvorgang eine oder mehrere Kolben-Zylindereinheiten zum Einsatz gelangen. Die verwendeten Kolben-Zylindereinheiten werden unter Einsatz einer Druckflüssigkeit, z.B. Hydrauliköl, betätigt, und die aufgebrachten Kräfte werden auf Spannbacken übertragen, die auf das zu bearbeitende Werkstück einwirken, und dieses auf der Palette festspannen.

Nach erfolgtem Spannvorgang des Werkstückes auf der Palette wird die Palette gemeinsam mit dem Werkstück entlang parallel angeordneter Präzisionsführungen bewegt, die z.B. Bestandteil eines Bearbeitungszentrums sind, in dem über Fräseinrichtungen, Bohrvorrichtungen und Schleifeinrichtungen auf das Werkstück eingewirkt wird.

Um die Kolben-Zylindereinheiten, die an der bekannten Palette angeordnet sind, betätigen zu können, weist jede Palette Anschlüsse für die Zufuhr und den Abfluss einer Hydraulikflüssigkeit auf. Die Flüssigkeit wird in flexible Rohrleitungen gefördert, die mit einer Versorgungseinheit wirkverbunden sind.

Bei den bekannten Einrichtungen dieser Art sind die an den flexiblen Rohren angeordneten Anschlussstücke mit einem Gewinde versehen, um zu erlauben, diese Anschlussstücke mit Rohrleitungen zu verbinden, die an der Palette angeordnet sind. Die Rohrleitungen an der Palette erstrecken sich bis zu den Kolben-Zylindereinheiten der Palette und dienen zum Spannen des Werkstückes.

Um den Fluss der Hydraulikflüssigkeit, die den Rohrleitungen der Palette zugeführt wird, unterbrechen zu können, ist es erforderlich, für jede Zuflussleitung bzw. für jede Rückflussleitung der Hydraulikflüssigkeit ein eigens dafür vorgesehenes Kugelventil vorzusehen.

Daher, um eine Palette zusammen mit einem Werkstück entlang der Präzisionsführung einer Werkzeugmaschine zu bewegen, war es in der Vergangenheit notwendig, folgende Schritte durchzuführen:
Die Palette musste zusammen mit dem Werkstück in einer Wartestellung angeordnet werden, um ein Absperren bzw. ein Öffnen der Spannbacken, die auf das Werkstück einwirkten, durchzuführen;
es war ein erstes Anschlussstück zu montieren, um die Zufuhr einer unter Druck stehenden Hydraulikflüssigkeit zu den Kolben-Zylindereinheiten zu ermöglichen;
im Anschluss daran war es erforderlich zu prüfen, ob dieses Anschlussstück auch ordnungsgemäss mit jenen Rohrleitungen, die zu den Spanneinrichtungen führten, verbunden war;
ferner war ein zweites Anschlussstück mit den dazugehörigen Rohrleitungen zu montieren, um einen Rücklauf der Hydraulikflüssigkeit von der Palette zu ermöglichen;
nach erfolgter Montage und Durchführung der erforderlichen Kontrollen war es notwendig, ein Kugelventil in den Zufuhrleitungen zu öffnen, und die Pumpe der Versorgungseinheit zu betätigen;
nach erfolgtem Spannvorgang des Werkstückes war ein in der Zuflussleitung vorgesehenes Kugelventil zu schliessen und die Förderpumpe der hydraulischen Versorgungseinheit abzuschalten;
im Anschluss daran waren Rohrleitungen anzuschliessen, die für den Zulauf bzw. den Ablauf der Hydraulikflüssigkeit vorgesehen waren, im Anschluss daran konnte das Werkstück den einzelnen Bearbeitungsvorgängen zugeführt werden.

Am Ende der Bearbeitungsvorgänge am Werkstück waren in einer Entladestsation für das Werkstück erneut flexible Rohrleitungen über Verbindungsstücke anzuschliessen, und es musste auf ein Kugelventil eingewirkt werden, um den Rücklauf der Hydraulikflüssigkeit zur Versorgungseinheit zu ermöglichen und um ein Entriegeln des bearbeiteten Werkstückes zu ermöglichen.

Die Spann- und Entriegelungsvorrichtungen für Paletten der beschriebenen Art, wie aus dem Stand der Technik bekannt geworden, hatten verschiedene Nachteile.

So war es einmal erforderlich, grösste Aufmerksamkeit bei der Montage des Zuführrohres sowie des Abflussrohres für die Hydraulikflüssigkeit aufzubringen; es waren die Anschlussstücke für die Zufuhr bzw. den Rücklauf der Hydraulikflüssigkeit einer eingehenden Kontrolle zu unterziehen, um zu vermeiden, dass während der Vorschubbewegung der Palette durch die Bearbeitungseinheit ein Druckverlust oder ein Austreten von Hydraulikflüssigkeit aus den Kolben-Zylindereinheiten der Spanneinrichtung auftreten könnte.

Nach dem Betätigen der Spanneinrichtung war es für ein Öffnen der Spanneinrichtung unumgänglich, auf Kugelventile sowie auf die Versorgungseinheit einzuwirken.

Bei diesen Betätigungsvorgängen bestand stets die Gefahr einer falschen Handhabung, was zu sehr schwerwiegenden Folgen führen konnte, z.B. einem Lösen des Werkstückes während der Transportbewegung der Palette und während der spanabhebenden Bearbeitung des Werkstückes.

Es ist nun Aufgabe der vorstehenden Erfindung, die Nachteile des Standes der Technik zu vermeiden und eine neue Palette der eingangs genannten Art vorzuschlagen, bei der auf eine Vorsehung von Kugelventilen in den Rohrleitungen verzichtet werden kann, und ein Zusammenfügen ohne jegliches Fehlerrisiko der Hydraulikeinrichtungen der Palette mit den Rohrleitungen der hydraulischen Versorgungseinheit zu ermöglichen und ferner ein Verbinden, bzw. ein Lösen der Schlauchleitungen zwischen Palette und Versorgunseinheit mit grösstmöglicher Schnelligkeit und Sicherheit zu erlauben.

Diese Aufgaben werden mit einer Palette gemäss Anspruch 1 gelöst.

Der Erfindungsgegenstand wird nun genauer, anhand eines Ausführungsbeispieles beschrieben und in den beigefügten Zeichnungen dargestellt.
Figur 1 zeigt, teilweise im Schnitt und teilweise in auseinandergezogener Ansicht, die Palette sowie die Aufnahmevorrichtung für die Schnellanschlüsse;

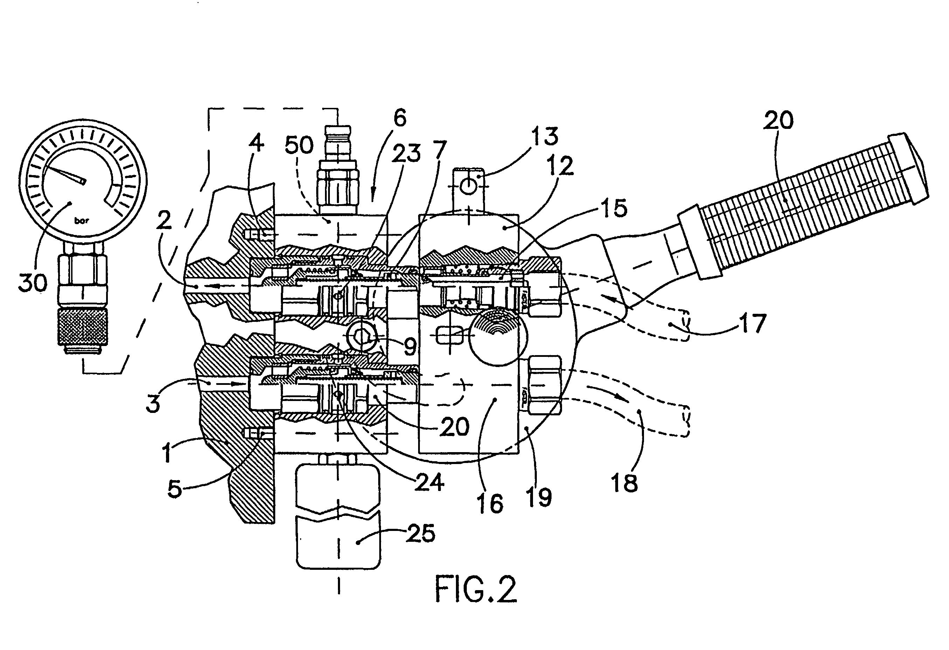

Figur 2 zeigt einen Teil der Palette sowie der Schnellanschlüsse während des Verbindungsvorganges;

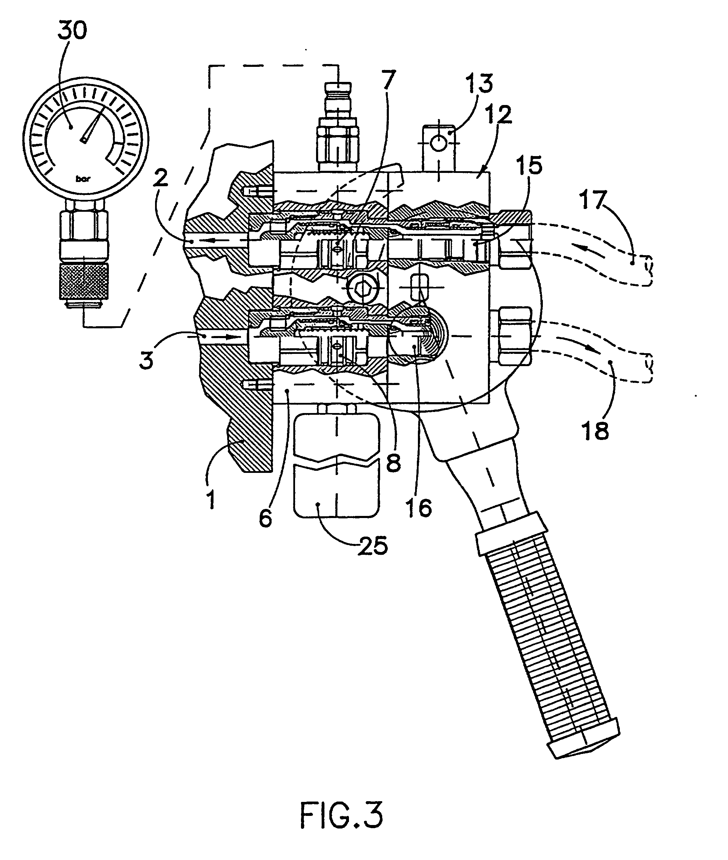

Figur 3 zeigt einen Teil der Palette mit den Schnellanschlüssen nach erfolgtem Zusammenfügen; und
Figur 4 zeigt schematisch im Schnitt eine Aufnahmevorrichtung mit einer Zuflussleitung und einer Rücklaufleitung für die Hydraulikflüssigkeit sowie mit Hilfseinrichtungen.

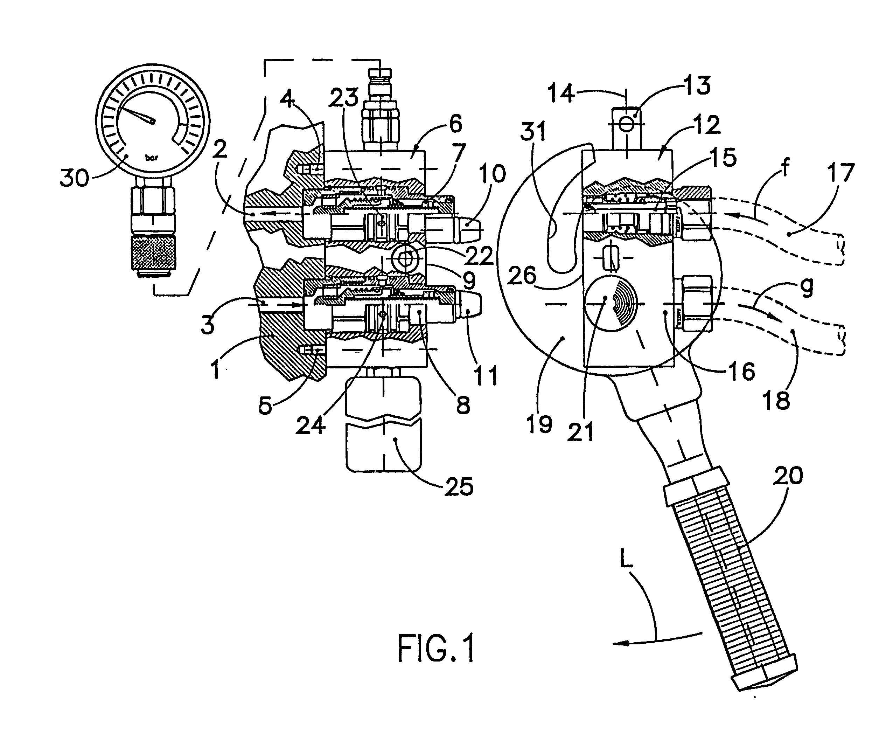

Wie der Figur 1 zu entnehmen ist, dient die Palette 1 dazu, ein zu bearbeitendes Werkstück (nicht dargestellt) aufzunehmen.

Die Palette 1 weist eine Rohrleitung 2 für die Zufuhr einer Hydraulikflüssigkeit zu Kolben-Zylindereinheiten auf.

Solche Kolben-Zylindereinheiten sind aus dem Stand der Technik bekannt und dienen dazu, auf ebenfalls bekannte Spanneinrichtungen einzuwirken, die in Figur 1 nicht dargestellt sind.

Die Palette 1 weist ferner eine Rohrleitung für den Rücklauf der Hydraulikflüssigkeit von den Kolben-Zylindereinheiten auf.

Unter Verwendung von Schrauben, die schematisch mit 4 und 5 gekennzeichnet sind, ist mit der Palette 1 eine Aunahmevorrichtung verbunden, die gesamthaft mit 6 gekennzeichnet ist.

In Übereinstimmung mit den Rohrleitungen 2 weist die Aufnahmevorrichtung 6 einen Schnellverschluss 7 auf, auch in Übereinstimmung mit der Rohrleitung 3 ist die Aufnahmevorrichtung 6 mit einem Schnellverschluss 8 ausgerüstet.

In Figur 1 sind die Schnellverschlüsse 7 und 8 der Aufnahmevorrichtung 6 als abstehende Einrichtungen ausgebildet, d.h. die freien Ende der Schnellverschlüsse 7 und 8 stehen von einer ebenen Fläche 9 der Aufnahmevorrichtung 6 ab.

Aus der ebenen Fläche 9 ragen ferner Stifte 10 und 11, die als Einrichtungen zur Lagefestlegung sowie zum Verbinden einer weiteren Aufnahmevorrichtung 12 dienen.

Diese weist nicht dargestellte Bohrungen für eine genaue Lageanordnung auf. In die Bohrungen werden während des Zusammenbauvorganges die Verbindungsstifte 10 und 11 eingesetzt.

Die Aufnahmevorrichtung 12 weist einen Bügel 13 oder ein ähnliches Bauteil auf, das die Möglichkeit schafft, die Aufnahmevorrichtung 12 mit einem Halteseil 14 zu verbinden und die Aufnahmevorrichtung 12 in einer genau festgelegten Höhenlage hängend zu lagern.

Die Aufnahmevorrichtung 12 weist eine Schnellkupplung 15 sowie eine Schnellkupplung 16 auf.

Die Kupplungsstücke 15 und 16 sind mit einer Verbindungsöffnung ausgestattet und können mit den Schnellkupplungen 7 und 8 der Aufnahmevorrichtung 6 zusammengesteckt werden.

Schnellkupplungen 7, 8, 15, 16, wie sie bisher beschrieben wurden, sind aus dem Stand der Technik bekannt. Mit der Schnellkupplung 15 ist eine Rohrleitung 17 für die Zufuhr der Hydraulikflüssigkeit Pfeil (f) verbunden.

Auch der Schnellverschluss 16 ist mit einer Rohrleitung 18 verbunden, die für den Rücklauf der Hydraulikflüssigkeit, wie durch den Pfeil (g) angedeutet, vorgesehen ist.

Mit der Verbindungsvorrichtung 12 ist eine Spanneinrichtung verbunden, die aus einem scheibenförmigen Bauteil 19 besteht, das mit einem Betätigungshebel verbunden ist.

Die Scheibe 19 kann um einen Zapfen 21 verschwenkt werden und weist eine Nute 31 auf, die exzentrischen Verlauf hat und mit dem Zapfen 22, der seitlich von der Aufnahmevorrichtung 6 absteht, in Verbindung bringbar ist.

Durch Betätigen des Hebels 20 in der mit (L) gekennzeichneten Richtung (Figur 1) wird eine Verbindung zwischen der exzentrisch verlaufenden Nute 31 und dem Zapfen 22 erstellt und es wird ermöglicht, die Schnellverschlüsse 7, 8 und 15, 16 durch Andrücken der ebenen Fläche 9 gegen die ebene Fläche 26 zu verbinden.

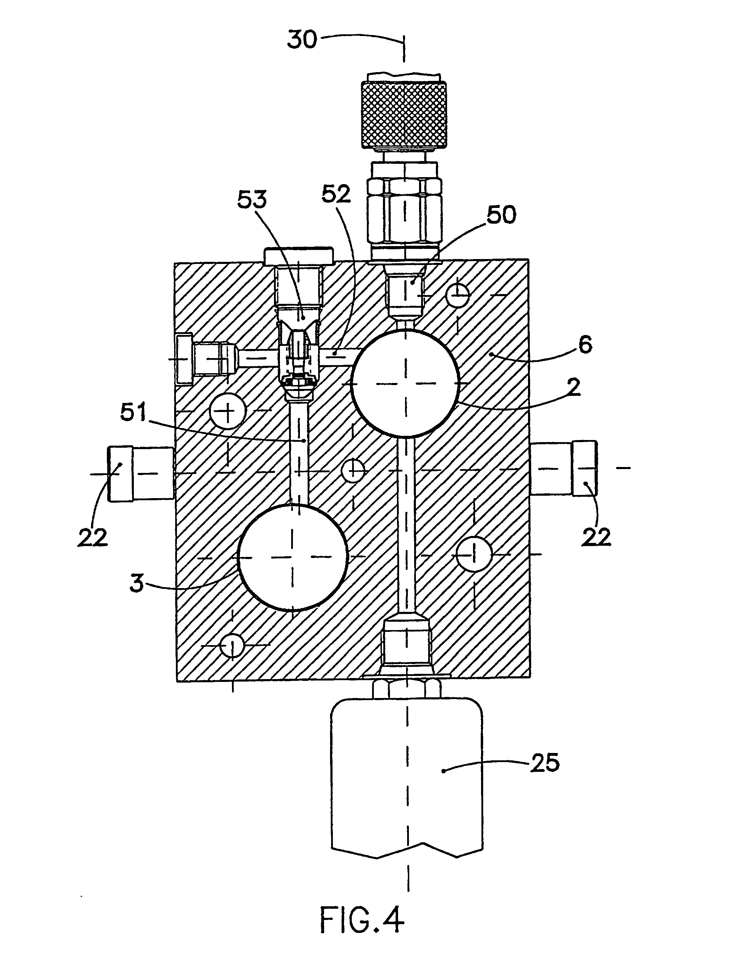

Der Schnellverschluss 8 der Haltevorrichtung weist an der Innenseite mehrere Bohrungen 24 auf, die über eine Ringkammer und über Leitungen (siehe Figur 4) mit einem Druckbehälter 25 in Wirkverbindung stehen.

Dieser Druckbehälter 25 hat die Aufgabe, mit Sicherheit den hydraulischen Druck im Inneren der Rohrleitungen 2 und 3 der Palette 1 aufrechtzuerhalten, auch wenn die Schnellverschlüsse 15, 16 nach Druckbeaufschlagung der Rohrleitungen 2, 3 von den Schnellverschlüssen 7 und 8 gelöst worden sind.

Über eine Leitung 50, die in die Aufnahmevorrichtung 6 eingebaut ist, wird die Zufuhrleitung 2 mit einem Manometer 30 verbunden, das den Arbeitsdruck und auch eventuell eintretende Druckabfälle im Leitungssystem anzeigt.

Mit besonderem Vorteil sind zwischen der Rücklaufleitung 3 der Palette 1, die sich zum Schnellanschluss 8 erstreckt und der Zufuhrleitung 2 für die Hydraulikflüssigkeit, die sich zum Schnellanschluss 7 erstreckt, Verbindungsleitungen 51, 52 vorgesehen, in die ein Rückschlagventil 53 eingebaut ist.

Das Rückschlagventil 53 erlaubt es, den Öffnungsdruck teilweise zu senken, wodurch vermieden wird, dass die Kolben-Zylindereinheiten zu schnell aufgrund der hohen, vorherrschenden Drücke zurückfahren.

Das Rückschlagventil 53 hat weiterhin die Aufgabe, das Öl in der Zufuhrleitung 2, 7 unter Druck zu halten, wenn die Palette und das gespannte Werkstück den Bearbeitungsvorgängen unterzogen werden.

Durch Vorsehung eines Rückschlagventils 53 wird auch der Druck in der Rücklaufleitung begrenzt, wennn die Palette 1 entladen werden soll.

Während des Entladevorganges des Werkstückes wird unter Zuhilfenahme der Versorgungseinheit der Druck in den Zufuhrleitungen 2, 7 vermindert und der Druck in den Rücklaufleitungen 3, 8 erhöht, was dazu führt, dass die Kolben-Zylindereinheiten zurückfahren und das Werkstück freigeben.

Mit dem Manometer 30 ist es ständig möglich, den Druck im Inneren des Rohrleitungssystemes der Palette 1 abzulesen und zu überwachen, auch wenn die Palette entlang paralleler Präzisionsführungen eines nicht dargestellten Bearbeitungszentrums verfahren wird, z.B. in einem modernen Bearbeitungszentrum, das über eine NC-Einrichtung gesteuert wird.

Um ein zu bearbeitendes Werkstück auf der Palette 1 zu spannen, findet die erfindungsgemässe Einrichtung wie folgt Verwendung:

Sobald das zu bearbeitende Werkstück auf der Palette 1 in der gewünschten Lage angeordnet ist, wird die Aufnahmevorrichtung 12 mit den Schnellanschlüssen 15 und 16, die über Rohrleitungen 17 und 18 mit der Versorgungseinheit (nicht dargestellt) verbunden ist, an die Aufnahmevorrichtung 6, die mit der Palette 1 verbunden ist, heranbewegt.

Im Anschluss daran werden die Positionierstifte 10 und 11, die von der Aufnahmeeinrichtung 6 abstehen, in die Bezugsbohrungen (nicht dargestellt) der Aufnahmevorrichtung 12 eingeführt.

Im Anschluss daran wird die exzentrisch verlaufende Öffnung 31 der Nute in der Scheibe 19 mit dem Spannzapfen 22, der von der Vorrichtung 6 absteht, in Wirkverbindung gebracht und durch Verschwenken des Hebels 20 (Pfeil L, Figur 1) erfolgt ein Annähern der Aufnahmevorrichtung 12 an die Aufnahmevorrichtung 6.

Somit wird eine Verbindung zwischen den Schnellverschlüssen 7 und 8, die von der Fläche 9 der Aufnahmevorrichtung 6 abstehen, mit den Schnellanschlüssen 15 und 16, die in die Aufnahmevorrichtung 12 eingearbeitet sind, durchgeführt.

Durch weiteres Einwirken auf den Hebel 20 wird eine Verbindung zwischen der ebenen Fläche 9 der Aufnahmevorrichtung 6 und der ebenen Fläche 26 der Aufnahmevorrichtung 12 durchgeführt.

Es ist vorteilhaft, eine Verriegelungsvorrichtung für die Scheibe 19 vorzusehen, wobei die Verriegelungsvorrichtung beim Zusammenstecken der Schnellanschlüsse 7, 8, 15, 16 ausser Betrieb zu setzen ist.

Die Verriegelungsvorrichtung besteht z.B. aus einem Druckknopf, mit dem es möglich ist, einen federbelasteten Spannstift, der in der Aufnahmevorrichtung 6 angeordnet ist, zu lösen.

Der Verbindungsvorgang zwischen den Vorrichtungen 6 und 12, dank der durchgeführten Auswahl eines geeigneten Schnellverschlusses, kann bei unter vollem Druck stehenden Rohrleitungen durchgeführt werden.

Sobald die Aufnahmevorrichtungen 6 und 12 vollkommen über die ebenen Flächen 9, 26 verbunden sind, erfolgt die Zufuhr der unter Druck stehenden Hydraulikflüssigkeit (Pfeil f) in Figur 1.

Die Hydraulikflüssigkeit strömt von den Rohrleitungen 17 über den Schnellanschluss 15 zum Schnellanschluss 23 und zur Leitung 2, was die Betätigung der Kolben-Zylindereinheit, die zum Spannen des Werkstückes vorgesehen ist, führt.

Gleichzeitig wird über nicht dargestellte Rohrleitungen das Druckgefäss 25 gefüllt und das Manometer 30 vom vorherrschenden Arbeitsdruck beeinflusst.

## Patentansprüche

1. Palette (1) mit Aufnahmevorrichtung zum Spannen eines zu bearbeitenden Werkstückes, besonders durch spanabhebende Bearbeitungsvorgänge, wobei die Palette (1) mit einer ersten-Aufnahmevorrichtung (6) verbunden ist, die einen Schnellanschluss (7) aufnimmt, der mit Rohrleitungen (2) für die Zufuhr einer Hydraulikflüssigkeit zu einer Kolben-Zylindereinheit der Palette (1), sowie mit einem Schnellanschluss (8) in Verbindung mit Rohrleitungen (3) für den Rücklauf der Hydraulikflüssigkeit von der Kolben-Zylindereinheit, ausgerüstet ist, wobei diese ersten Schnellanschliusse (7, 8) mit zweiten Schnellanschlüssen (15, 16) verbindbar sind, die mit einer Rohrleitung zum Zuführen der Hydraulikflüssigkeit sowie mit einer Rohrleitung (18) für den Rücklauf der Hydraulikflüssigkeit zu einer Versorgungseinheit verbunden sind, wobei die zweiten Schnellanschlüsse (15, 16) in einer zweiten Aufnahmevorrichtung (12) angeordnet sind,
**dadurch gekennzeichnet,**
**dass**, die zweite Aufnahmevorrichtung einen Betätigungshebel (20) für eine Verbindungseinrichtung aufweist, und der Betätigungshebel (20) an einer Scheibe angeordnet ist, die eine exzentrisch verlaufende Nute (31) aufweist und die exzentrisch verlaufende Nute (31) mit einem Führungszapfen (22) verbindbar ist, der an der ersten Aufnahmevorrichtung (6) für die ersten Schnellanschlüsse (7,8) befestigt ist und die zweite Aufnahmevorrichtung (12) mit einer Öse (13) versehen ist, mit der ein Halteseil (14) verbunden ist, und die Schnellverbindung (8), die mit der Rohrleitung (3) der Palette (1) in Verbindung steht, innenseitig Bohrungen (24) aufweist, und diese Bohrungen (24) mit einem Druckspeicher (25) in Wirkverbindung stehen.

2. Palette, zum Spannen eines zu bearbeitenden Werkstückes, nach Patentanspruch 1, **dadurch gekennzeichnet, dass** die Schnellanschlüsse (7, 8) der ersten Aufnahmevorrichtung (6) als aus einer ebenen Fläche (9) vorspringende Bauteile ausgebildet sind.

3. Palette, zum Spannen eines zu bearbeitenden Werkstückes, nach Patentanspruch 1, **dadurch gekennzeichnet, dass** von einer ebenen Fläche (9) der ersten Aufnahmevorrichtung (6) Positionier- und Verbindungsstifte (10, 11) abstehen.

4. Palette, zum Spannen eines zu bearbeitenden Werkstückes, nach Patentanspruch 1, **dadurch gekennzeichnet, dass** die zweite Aufnahmevorrichtung (12) Schnellverbindungen (15, 16) mit Ausnehmungen sowie Bohrungen zur Aufnahme von Positionierstiften (10, 11) aufweist.

5. Palette, zum Spannen eines zu bearbeitenden Werkstückes, nach Patentanspruch 1, **dadurch gekennzeichnet, dass** die Zufuhrleitungen (2) mit einem Manometer (30) wirkverbunden sind.

6. Palette, zum Spannen eines zu bearbeitenden Werkstückes, nach Patentanspruch 1, **dadurch gekennzeichnet, dass** zwischen den Rohrleitungen (3) für den Rücklauf der Hydraulikflüssigkeit zur Schnellverbindung (8) und zur Schnellverbindung (7) bzw. zur Rohrleitung (2) für den Zulauf der Hydraulikflüssigkeit, ein Rückschlagventil (53) eingebaut ist.

7. Palette, zum Spannen eines zu bearbeitenden Werkstückes, nach Patentanspruch 1, **dadurch gekennzeichnet, dass** die Scheibe (19) mit einer Einrichtung zum Verhindern einer Drehbewegung ausgerüstet ist.

## Claims

1. Pallet (1) with holding fixture for clamping a workpiece to be processed, in particular by machining operations, the pallet (1) being connected to a first holding fixture (6) which accommodates a quick-acting connection (7) which is provided with conduits (2) for the feed of a hydraulic fluid to a piston/cylinder unit of the pallet (1) and with a quick-acting connection (8) in combination with conduits (3) for the return of the hydraulic fluid from the piston/cylinder unit, it being possible to connect these first quick-acting connections (7, 8) to second quick-acting connections (15, 16) which are connected to a conduit for the feed of the hydraulic fluid and to a conduit (18) for the return of the hydraulic fluid to a supply unit, the second quick-acting connections (15, 16) being arranged in a second holding fixture (12), **characterized in that** the second holding fixture has an actuating lever (20) for a connecting device, and the actuating lever (20) is arranged on a disc which has an eccentric slot (31), and the eccentric slot (31) can be connected to a guide pin (22) which is fastened to the first holding fixture (6) for the first quick-acting connections (7, 8) and the second holding fixture (12) is provided with an eye (13) to which a holding rope (14) is connected and the quick-acting connection (8) which is connected to the conduit (3) of the pallet (1) has bores (24) on the inside, and these bores (24) are in operative connection with a pressure reservoir (25).

2. Pallet for clamping a workpiece to be processed according to Patent Claim 1, **characterized in that** the quick-acting connections (7, 8) of the first holding fixture (6) are designed as components projecting from a flat surface (9).

3. Pallet for clamping a workpiece to be processed according to Patent Claim 1, **characterized in that** positioning and connecting pins (10, 11) project from a flat surface (9) of the first holding fixture (6).

4. Pallet for clamping a workpiece to be processed according to Patent Claim 1, **characterized in that** the second holding fixture (12) has quick-acting connections (15, 16) with recesses and bores for accommodating positioning pins (10, 11).

5. Pallet for clamping a workpiece to be processed according to Patent Claim 1, **characterized in that** the feed lines (2) are in operative connection with a pressure gauge (30).

6. Pallet for clamping a workpiece to be processed according to Patent Claim 1, **characterized in that** a check valve (53) is fitted between the conduits (3) for the return of the hydraulic fluid to the quick-acting connection (8) and to the quick-acting connection (16) and the conduit (2) for the inflow of the hydraulic. fluid.

7. Pallet for clamping a workpiece to be processed according to Patent Claim 1, **characterized in that** the disc (19) is provided with a device for preventing a rotary movement.

## Revendications

1. Palette (1) comprenant un dispositif de réception pour serrer une pièce à usiner, en particulier par des opérations d'usinage par enlèvement de copeaux, dans laquelle la palette (1) est reliée à un premier dispositif de réception (6) qui reçoit un raccord rapide (7) qui est muni de conduites tubulaires (2) pour l'alimentation d'un fluide hydraulique à une unité cylindre-piston de la palette (1), ainsi que d'un raccord rapide (8) raccordé à des conduites tubulaires (3) pour le retour du fluide hydraulique depuis l'unité cylindre-piston, ces premiers raccords rapides (7, 8) pouvant être raccordés à des deuxièmes raccords rapides (15, 16) qui sont raccordés à une conduite tubulaire pour l'alimentation en fluide hydraulique ainsi qu'à une conduite tubulaire (18) pour le retour du fluide hydraulique à une unité d'alimentation,
les deuxièmes raccords rapides (15, 16) étant disposés dans un deuxième dispositif de réception (12), **caractérisée en ce que** le deuxième dispositif de réception présente un levier d'actionnement (20) pour un dispositif de raccordement et le levier d'actionnement (20) est disposé sur un disque qui présente une rainure (31) s'étendant de manière excentrée et la rainure (31) s'étendant de manière excentrée peut être raccordée à un tourillon de guidage (22) fixé sur le premier dispositif de réception (6) pour les premiers raccords rapides (7, 8), et le deuxième dispositif de réception (12) est pourvu d'un oeillet (13) auquel est raccordé un câble de maintien (14) et le raccord rapide (8), qui est raccordé à la conduite tubulaire (3) de la palette (1), présente du côté interne des alésages (24) et ces alésages (24) sont en liaison coopérante avec un accumulateur de pression (25).

2. Palette pour serrer une pièce à usiner selon la revendication 1, **caractérisée en ce que** les raccords rapides (7, 8) du premier dispositif de réception (6) sont réalisés sous la forme de composants saillant depuis une surface plane (9).

3. Palette pour serrer une pièce à usiner selon la revendication 1, **caractérisée en ce que** des broches de positionnement et de raccordement (10, 11) dépassent d'une surface plane (9) du premier dispositif de réception (6).

4. Palette pour serrer une pièce à usiner selon la revendication 1, **caractérisée en ce que** le deuxième dispositif de réception (12) présente des raccords rapides (15, 16) avec des évidements et des alésages pour recevoir des broches de positionnement (10, 11).

5. Palette pour serrer une pièce à usiner selon la revendication 1, **caractérisée en ce que** les conduites d'alimentation (2) sont en liaison coopérante avec un manomètre (30).

6. Palette pour serrer une pièce à usiner selon la revendication 1, **caractérisée en ce qu'**une soupape de non retour (53) est installée entre les conduites tubulaires (3) pour le retour du fluide hydraulique vers le raccord rapide (8) et vers le raccord rapide (7) ou vers la conduite tubulaire (2) pour l'alimentation en fluide hydraulique.

7. Palette pour serrer une pièce à usiner selon la revendication 1, **caractérisée en ce que** le disque (19) est muni d'un dispositif pour empêcher un mouvement de rotation.
